# EUROPEAN PATENT APPLICATION

(11) **EP 1 263 153 A2**
(43) Date of publication of application: **04.12.2002**
(21) Application number: 01305928.2
(22) Date of filing: 10.07.2001
(51) Int. Cl.: H04B 10/00, H04B 10/213, H04J 14/02

(54) **Failure protection switching in optical network**

(30) Priority: 01.06.2001 US 872363
(71) Applicant: Redfern Broadband Networks Inc., Wilmington, County of Newcastle, Delaware, 19801 (US)
(72) Inventor: Lauder, Richard, Maroubra, New South Wales 2035 (AU); Bryce, Jennifer, Potts Point, New South Wales 2011 (AU); Morgan, Trefor, Carlton, Victoria 3053 (AU)
(74) Representative: Samuels, Adrian James

(57) **Abstract**

A method of effecting failure protection switching in an optical network, the optical network comprising a ring structure carrying a bi-directional optical data signal, and a plurality of network hubs arranged in-line within the ring structure, each network hub being arranged, in use, to transmit and receive signals bi-directionally along the ring structure, the method comprising the steps of a) detecting a "no signal" at a primary pre-amplificr located at one of the network hubs and arranged to pre-amplify a primary optical signal received from a first direction along the ring structure b) shutting down the primary prc-amplifier and powering up a secondary pre-amplifier located at the one network hub and arranged to pre-amplify a redundant optical signal corresponding to the optical signal and received from the opposing direction along the ring structure.

## Description

### Field of the invention

The present invention relates broadly to a method of effecting failure protection switching in an optical network, the optical network comprising a ring structure carrying a bi-directional optical data signal and a plurality of network hubs arranged in-line within the ring structure, each network hub being arranged, in use, to transmit and receive signals bi-directionally along the ring structure. The present invention relates also to an optical network for implementing the method, and to network hubs for use in such an optical network.

### Background of the invention

The use of wavelength division multiplexing has caused ever increasing amounts of data to be carried on a single optical fibre and within a single cable containing many fibres, ie within optical networks. The need to protect this data against failure caused by cable or fibre break or failure of in-line amplifiers is thus paramount.

### Summary of the invention

In accordance with a first aspect of the present invention there is provided a method of effecting failure protection switching in an optical network, the optical network comprising a ring structure carrying a bi-directional optical data signal, and a plurality of network hubs arranged in-line within the ring structure, each network hub being arranged, in use to transmit and receive signals bi-directionally along the ring structure, the method comprising the steps of detecting a "no signal" at a primary pre-amplifier located at one of the network hubs and arranged to pre-amplify a primary optical signal received from a first direction along the ring structure; shutting down the primary pre-amplifier and powering up a secondary pre-amplifier located at the one network hub and arranged to pre-amplify a redundant optical signal corresponding to the optical signal and received from the opposing direction along the ring structure.

Preferably, the method further comprises the step of powering down a post-amplifier located at the one network hub and arranged to post-amplify a transmitted signal from the one network hub along the ring structure in the first direction towards a fibre break causing the "no signal". Accordingly, potentially dangerous levels of optical radiation out of the fibre break can be avoided.

The method may further comprise the step of shutting down other post-amplifiers located at other network hubs, the other post amplifiers being arranged to post-amplify transmitted signals from their respective network hubs for transmission towards the fibre break causing the "no signal". Accordingly, this can further safeguard against potentially dangerous levels of optical radiation out of the fibre break.

The method preferably comprises the step of determining, after the "no signal" has been detected at the first primary pre-amplifier, whether a signal is still being detected on the management channel at the one network hub, whereby a distinction can be made between a fibre break in the ring structure and a failure of a specified amplifier for transmitting the signal specified for receipt at the primary pre-amplifier.

Where, at the one network hub, a switch is utilised to selectively through connect signals received at the primary or secondary pre-amplifiers into the network hub, the method further comprises switching the through connections from the primary to the secondary pre-amplifier.

In accordance with a second aspect of the present invention there is provided an optical network comprising a ring structure carrying a bi-directional optical data signal and a plurality of network hubs arranged in-line within the ring structure, each network hub being arranged, in use, to transmit and receive signals bi-directionally along the ring structure, the network being arranged in a manner such that, upon detection of a "no signal" at a primary pre-amplifier located at one of the network hubs and arranged to pre-amplify a primary optical signal received from a first direction along the ring structure; the primary pre-amplifier is being shut down and a secondary pre-amplifier located at the other side of the specified network hub and arranged to pre-amplify a redundant optical signal corresponding to the primary optical signal and received from the opposing direction along the ring structure is being powered up.

Preferably, the network is further arranged, in use, to power down a post-amplifier located at the one network hub and arranged to post-amplify a transmitted signal from the one network hub along the ring structure in the first direction towards a fibre break causing the "no-signal".

The network may further be arranged, in use, to send a specified signal on a management channel of the network, the management channel being transmitted on a wavelength outside the wavelength band occupied by the data channels, wherein the specified signal effects the shutting down of other post-amplifiers located at other network hubs, the other post amplifiers being arranged to post-amplify transmitted signals from their respective network hubs towards the fibre break.

The network is further preferably arranged, in use, to determine, after the "no signal" has been detected at the first primary pre-amplifier, whether a signal is still being detected on the management channel at the one of the network hubs, whereby a distinction can be made between a fibre break in the ring structure and a failure of a specified post-amplifier for transmitting the signal specified for receipt at the primary pre-amplifier.

The one network hub may further comprise a switch for selectively through connecting signals received at the primary to secondary pre-amplifiers into the network hub. Alternatively, a passive coupler element may be incorporated in the network hub whereby both the primary and secondary pre-amplifiers are through connected into the network hub.

The ring structure may comprise at least one single, bi-directional traffic carrying fibre connection between network elements. Alternatively or additionally, the ring structure may comprise at least two, each uni-directional traffic carrying fibre connections between network elements.

The optical network may be implemented in a hub architecture or in a peer-peer architecture.

The pre-and/or post amplifiers may comprise EDFAs (erbium doped Fibre amplifiers) and/or SOAs (semiconductor optical amplifiers).

In one embodiment, the network is further arranged, in use, to determine, after the "no signal" has been detected at the first primary pre-amplifier, whether a signal is still being detected on a management channel of the network at the one network hub. the management channel being outside the channels occupied by the data signal, and to check status reports of other network hubs and in-line amplifiers, whereby a distinction can be made between a fibre break in the restructure and a failure of an amplifier.

In accordance with a third aspect of the present invention there is provided a network hub for use in an optical network, the optical network comprising a ring structure carrying a bi-directional optical data signal and a plurality of network hubs arranged in-line within the ring structure, the network hub being arranged, in use, to transmit and receive signals bi-directionally along the ring structure, and the network huh comprising a primary pre-amplifier arranged to pre-amplify a primary optical signal received from a first direction along the ring structure and a secondary pre-amplifier arranged to pre-amplify a redundant optical signal corresponding to the primary optical signal and received from the opposing direction along the ring structure, wherein the network hub is arranged, in use upon detection of a "no signal" at the primary pre-amplifier to shut down the primary pre-amplifier and to power up the secondary pre-amplifier.

Preferably, the network hub comprises a passive coupler clement for through-connecting both the primary and second pre-amplifiers into the network hub for processing of the primary and redundant optical signal. Alternatively, the network hub may comprise a switch arranged, in use, to selectively through-connect either the primary or the second pre-amplifier into the network hub for processing of the primary or redundant optical signal.

The pre-and/or post amplifiers may comprise BDFAs and/or SOAs.

Preferred forms of the present invention will now be described, by way of example only, with reference to the accompanying drawings.

### Brief description of the drawings

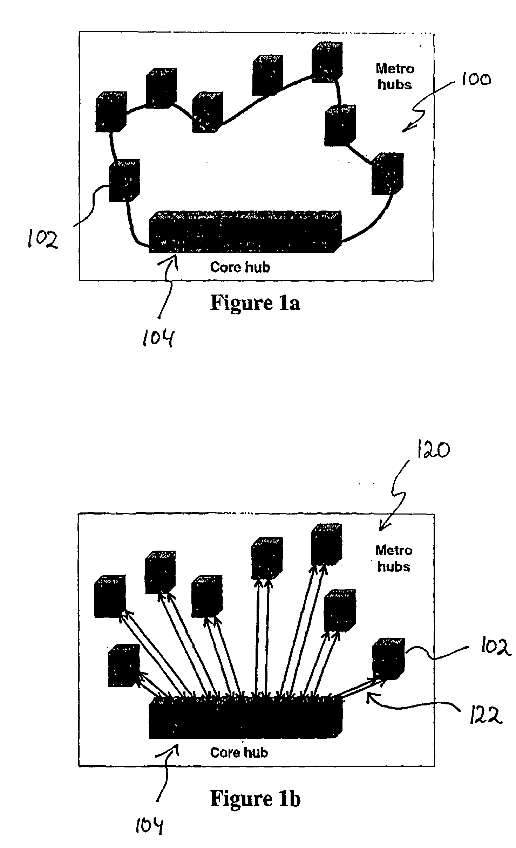

Figure 1a - Physical topology embodying the present invention.
Figure 1b - Logical Network Connections embodying the present invention.
Figure 1c - Use of CWDM to create point to point connections between Metro and Core Hubs embodying the present invention.
Figure 1 d - Three Types of Network Topology embodying the present invention.
Figure 2 - Hub configuration for Type A Ring embodying the present invention.
Figure 3 - Line interface, channel switch, and trunk interface cards embodying the present invention.
Figure 4 - Possible DWDM Configurations embodying the present invention.
Figure 5 - CDWM Interfaces embodying the present invention.
Figure 6 - Fibre protection Using pre-amplifier embodying the present invention.
Figure 6a - Fibre protection using pre-amplifier embodying the present invention in another embodiment.
Figure 7 - Simple in-line amplifier structure embodying the present invention.
Figure 8 - First alternative in-line amplifier structure embodying the present invention.
Figure 9 - Second alternative In-line amplifier structure embodying the present invention.
Figure 10 - Power levels within a Type B ring embodying the present invention.
Figure 11 - In-line hub amplification embodying the present invention.
Figure 12 - Bi-directional uniamplification amplifier, symbol and implementation embodying the present invention.
Figure 13 - Management Channel Connectivity for a Single Fibre Ring embodying the present invention.
Figure 14 - Type A Ring with Fibre Break between Metro Hubs 1 and 2 embodying the present invention.
Figure 15 - Type A Ring with Fibre Break between Metro Hubs 2 and 3 embodying the present invention.
Figure 16 - Type A Ring with Post-Amplifier Failure - Option 1 embodying the present invention.
Figure 17 - Type A Ring with Post-Amplifier Failure - Option 2 embodying the present invention.
Figure 18 - Type A Ring with Pre-Amplifier Failure embodying the present invention.
Figure 19 - Type B Ring with Fibre Break between Metro Hub 4 and an In-Line Amplifier embodying the present invention.
Figure 20 - Type B Ring with In-Line Amplifier Failure embodying the present invention.
Figure 21 - Type C Ring with Fibre Break between Metro Hubs 1 and 2 embodying the present invention.
Figure 22 - Type C Ring with Fibre Break between Metro Hub 1 and the Core Hub embodying the present invention.
Figurc 23 - Type C Ring with Fibre Break between Metro Hub 3 and the In-Line Amplifier embodying the present invention.
Figure 24 - Type C Ring with In-Line Hub Amplifiers with Fibre Break between In-Line Amplifiers embodying the present invention.
Figure 25 - Type C Ring with Tn-Line Hub Amplifiers with Fibre Break between Metro Hub 3 and in-line amplifier embodying the present invention.

### Detailed description of the embodiments

This document describes the design of the optical transmission layer of a telecommunications network platform in which bi-directional transmission and protection is implemented utilising pre-amplifier switching techniques.

In the following description, the general network topology and fundamental design assumptions are first outlined. Following this, three different variations of the network topology are identified, each of which represents a specific embodiment of the present invention. The description first discloses the simplest topology- a small ring comprising only pre/post amplifiers - and progresses in two further stages to disclose the full-scale solution with in-line and hub amplifiers.

### 1 Network Topology

In Figures 1a to c schematic diagrams are provided illustrating the physical topology 100, the logical network connections 120, and the ring network implementation 140. The implementation uses coarse wavelength division multiplexing (CWDM) 142 to create point to point connections 122 between a plurality of metropolitan ("metro") hubs 102 and a single core hub 104 in a ring structured network 106 embodying the present invention. The specific embodiments described here pertain primarily to networks in which the total perimeter of the ring 106 is up to 500 km in length, however it will be appreciated that in many applications larger rings could be accommodated without departing from the scope of the present invention.

The ring topology 106 provides for optical path protection of the logical connections between the metro hubs 102 and the core hub 104, since each metro hub 102 is able to access the core hub 104 via two geographically diverse routes, namely the clockwise 146 and counter-clockwise 144 propagation directions of the optical fibre ring, as shown in Figure 1c. The normal working path is termed the "primary" 144, and the protection path, which is used when a failure occurs on the primary path, is termed the ''secondary" 146. In use, the primary path 144 will typically be the shorter of the two paths between a metro hub and the core hub, while the secondary path 146 will be the longer.

The network architecture disclosed here is capable of providing full functionality, i.e. bi-directional transmission and protection, on a single fibre. However, it is important to note that any number of additional fibres may be employed in order to provide higher transmission capacity to support a larger number of wavelength connections and/or hubs.

It will he appreciated that one or more of the additional fibres may again be implemented as providing full functionality, i.e. bi-directional transmission and protection, on a single fibre. Accordingly, the present invention can provide for network operators a more cost-effective initial system, more efficient use of fibre resources, and a more graceful upgrade path as compared to conventional architectures such as unidirectional path switch rings (UPSR's) or bi-directional line switched rings (BLSR's) which require transmission fibres to be commissioned in multiples of two or four respectively.

However, it is noted that the present invention can also be implemented over a two-fibre structure so as to simplify design for systems using in-line amplifiers (no propagation direction separation required) and to relax isolation requirements in the transmission signals.

Each metro hub 102 in the exemplary embodiment communicates with the core hub 104 using one or more wavelengths uniquely allocated to that metro hub, and not used by any other metro hub, and the same one or more wavelengths are used on both the primary path 144 and the secondary path 146.

Three specific embodiments based on this general topology are to be disclosed. These specific embodiments are differentiated by transmission distances and hub location. The modularity of the system is maintained from the simplest configuration to the most complex, allowing for graceful upgrades of hubs, ease of rack design, and providing the flexibility for the hub functionality to be matched with specific user requirements.

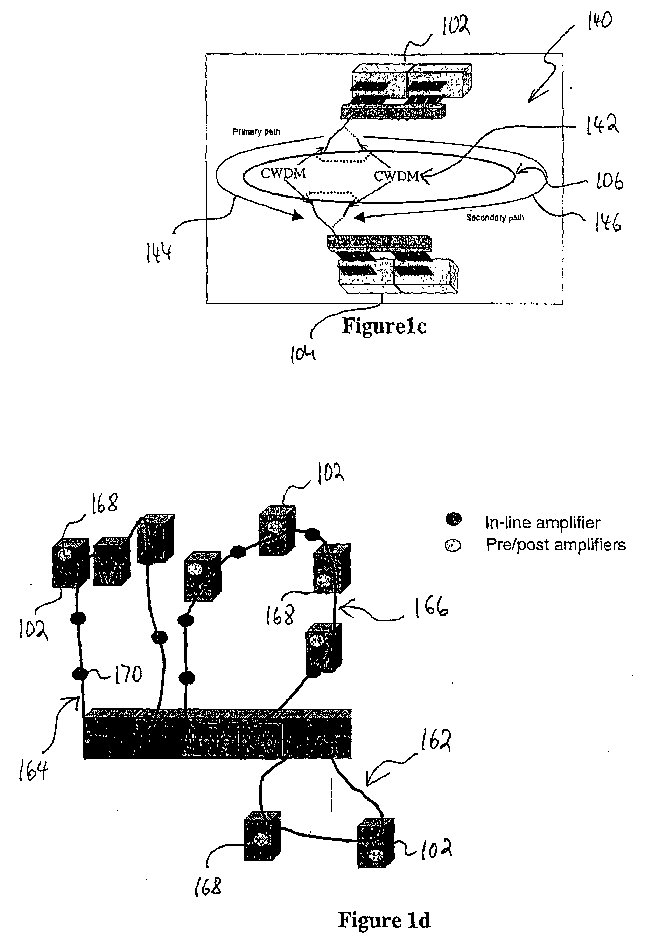

Figure 1d shows the three specific embodiments referred to as: Type A, 162; Type B, 164; and Type C, 166. In Figure 1d all three embodiments are shown operating from a single core hub 104. In use, a core hub 104 may support any combination of embodiments 162, 164, 166. Each embodiment implies different requirements for the design of the hubs 102, 104 and the amplification required between hubs. The defining characteristics of each embodiment are:
Type A, 162 - medium size ring, in which optical pre and/or post-amplifiers 168 may be required in the hubs, for hub traffic only;
Type B, 164 - clustered metro hub configuration, in which a group of metro hubs may be a significant distance from the core hub but in a close cluster locally. Line amplifiers 170 are required in the links between core hub 104 and metro hubs 102 but none between adjacent metro hubs 102.
Type C, 166 - maximally flexible solution, in which the hub spacing is large and any combination of line amplifiers 170 and/or pre- and/or post-amplifiers 168 must be supported.

Starting with the simplest embodiment 160, each increase in complexity leads to new design issues. The following sub-sections give an overview of each of the four specific embodiments 162, 164, 166.

### 2 Type A Embodiment 162 - Medium Size Ring with Hub Amplifiers

In Figure 1d, the Type A embodiment 162 is a ring network in which one or more paths exist for which the optical power budget is exceeded by the losses incurred in transmission through fibre and traversal of optical components.

In the Type A embodiment 162, the exhaustion of the optical power budget is overcome by the addition of optical amplifiers 168 at the transmitters, at the receivers, or both. An optical amplifier placed after a transmitter to boost the launched power is referred to as a post-amplifier, whereas an optical amplifier placcd in front of a receiver to improve sensitivity is referred to as a pre-amplifier. Advantageously, an optical amplifier 168 used as a post-amplifier will have a high output power, whereas an optical amplifier 168 used as a pre-amplifier will have a low noise figure.

The key characteristics of the Type A embodiment 162 are:
- transmission distances are short compared with the Type B and C embodiments 164, 166. Chromatic dispersion may be a limiting factor on some paths, depending upon the bit-rate, fibre type and components used. Where chromatic dispersion is not a limiting factor, advantageously, some cheaper components, such as short-haul directly modulated lasers, may he employed. Where chromatic dispersion may be a limiting factor, advantageously, high performance components, such as long-haul lasers, may be employed;
- in the event of a fibre-cut, post-amplifiers must switch off to prevent potentially hazardous levels of optical radiation from being emitted from the cut fibre;
- protection switching may be effected by using an optoelectronic switch or, advantageously, by using dual homing and the gain of the hub pre-amplifiers;
- optical post- and pre-amplifiers 168 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following the hub design in the Type A embodiment 162, which is a ring network in which one or more paths exist for which the optical power budget is exceeded by the losses incurred in transmission through fibre and traversal of optical components, will be described in more detail. The Type A network embodiment 162 comprises hubs that comprise optical pre-amplifiers, optical post-amplifiers, or both optical pre-amplifiers and optical post-amplifiers 168, The optical pre- and/or post-amplifiers 168 are additionally employed to effect protection switching as will be described below.

### 2.1 Overview of Hub Structure in the Type A Embodiment 162 (Figure 1d)

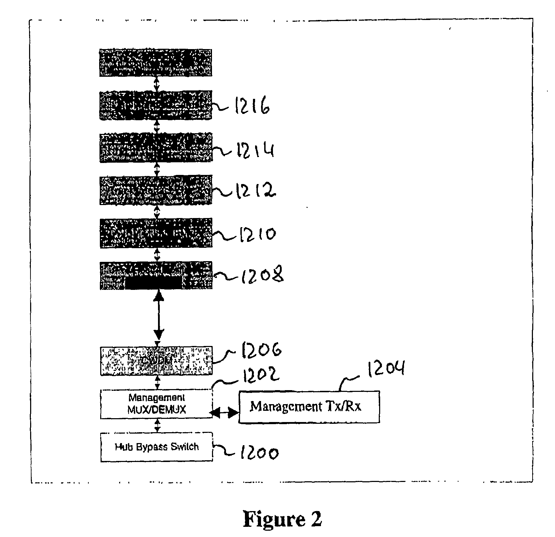

Figure 2 is a block diagram that shows schematically the major units that may comprise a hub 102, 104 (Figure 1d) in the Type A embodiment. They are the Line Interface Card (LIC) 1216, Channel Switch 1214, Trunk Interface Card (TIC) 1212, DWDM MUX/DEMUX Unit 1210, CWDM Unit 1206, Management Unit 1202, 1204, Hub Bypass Switch 1200 and pre and post-amplifiers 1208.

### 2.2 Line Interface Cards 1216, Channel Switch 1214, Trunk Interface Cards 1212

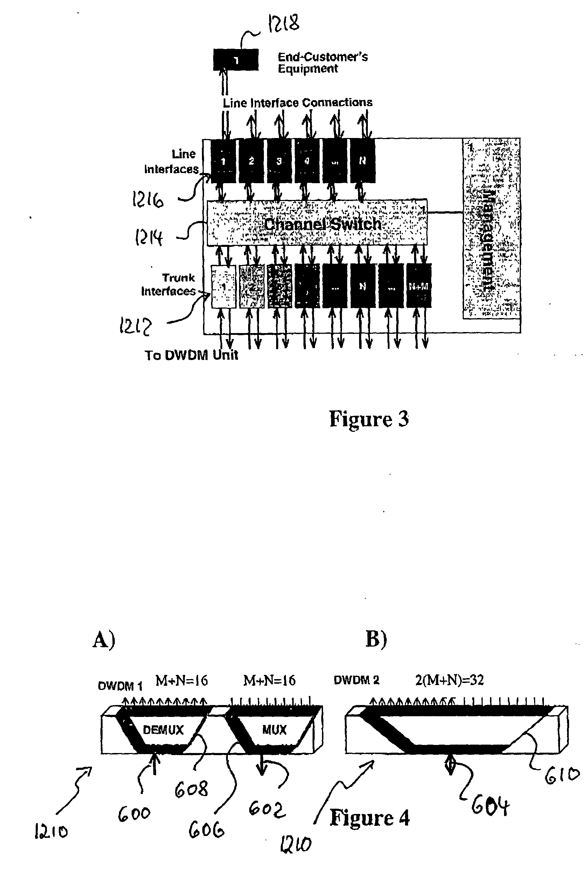

Figure 3 is a block diagram that shows schematically the configuration of the Line Interface Cards 1216, Channel Switch 1214 and Trunk Interface cards 1212 in a hub configured for use in the Type A embodiment 162 (Figure 1d). Each Line Interface Card 1216 provides a duplex connection to a Customer Equipment Unit 1218, and is connected to a single Trunk Interface Card 1212 according to the configuration of the Channel Switch 1214. In the hub configuration shown in Figure 3, the hub is capable of providing M:N channel protection, in which M+N Trunk Interface Cards 1212 are provided to connect only N Line Interface Cards 1216. Thus up to M trunk failures can be restored by switching the corresponding Line Interface Cards 1216 to an unused Trunk Interface Card 1212 by reconfiguring the Channel Switch 1214.

Each Trunk Interface Card 1212 requires a suitable single-frequency DWDM laser for transmission of the trunk signal into the network vía the DWDM MUX/DEMUX Unit 1210, the CWDM Unit 1206, the Management MUX/DEMUX Unit 1202 and the Hub Bypass Switch 1200 (all Figure 2). This laser may be a relatively low-cost device, such as a directly-modulated, temperature-stabilised distributed feedback (DFB) semiconductor laser. However it will be appreciated that more costly, higher-performance lasers could be used, and may be necessary for Trunk Interface Cards 1212 which support very high transmission rates, e.g. 10 Gb/s and above, or where very close DWDM channel spacing is employed requiring greater wavelength stability.

### 2.3 DWDM MUX/DEMUX Unit 1210 (Figure 2)

Returning to Figure 2, each Trunk Interface Card 1212 is connected by a pair of fibres to the DWDM MUX/DEMUX Unit 1210. Each fibre connecting a Trunk Interface Card 1212 to the DWDM Unit 1210 carries a single wavelength in one direction. In the exemplary embodiment described here, half of these wavelengths will carry data transmitted from the hub and half will carry data to be received at the hub, however it will be appreciated by persons skilled in the art that hub configurations are possible in which asymmetric transmission is provided. In the exemplary embodiment there are 16 full-duplex channels at each hub comprising 16 transmitted (Tx) wavelengths and 16 received (Rx) wavelengths, i.e. a total of 32 different wavelengths. However, it will be appreciated that a greater or smaller number of channels could be accommodated without departure from the scope of the present invention. The DWDM Unit 1210 receives the 16 Tx channels from the Trunk Interface Cards 1212 and multiplexes them onto a single fibre. It also receives the 16 Rx channel signals from the CWDM Unit 1206 and demultiplexes them to the 16 Rx fibres connected to the Trunk Interface Cards 1212.

Advantageously, the hub may comprise M spare Trunk Interface Cards 1212 to provide a number of protection channels per direction. Figure 3 shows an example of such a configuration, in which (M+N):N channel protection is supported, where (N+M)= 16, for the exemplary embodiment, and N is the number of Line Interface Cards 1216 provided.

Figures 4A and 4B, show schematically two exemplary embodiments of the DWDM MUX/DEMUX Unit 1210. In the first exemplary embodiment, Figure 4A, the DWDM MUX/DEMUX Unit 1210 comprises internally separate optical multiplexing means 606 and demultiplexing means 608, and comprises externally a unidirectional input fibre 600 and a unidirectional output fibre 602. In the second exemplary embodiment, Figure 4B, the DWDM MUX/DEMUX Unit 1210 comprises internally a single optical multiplexing and demultiplexing means 610, and comprises externally a single bi-directional, input/output fibre 604. In either embodiment the optical multiplexing and demultiplexing means may be, e.g. a free-space diffraction grating based device, or a planar lightwave circuit based device such as an arrayed waveguide grating. It will be appreciated that other embodiments of the DWDM MUX/DEMUX Unit 1210, and other optical multiplexing and demultiplexing means, may be employed without departing from the scope of the present invention.

### 2.4 CWDM Unit 1206 (Figure 2)

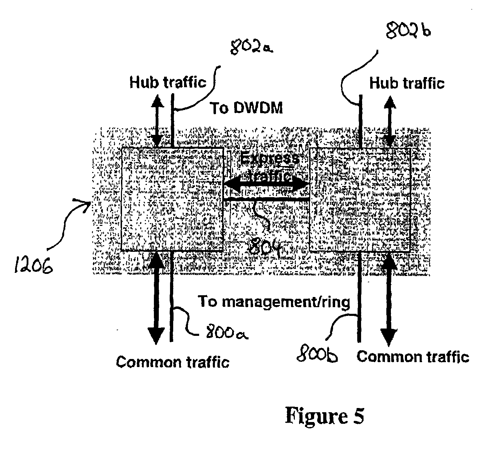

The CWDM Unit 1206 adds/drops the appropriate wavelength blocks for the hub and passes all other express traffic by the hub. Figure 5 shows schematically the logical connections to, from and within the CWDM Unit 1206. The CWDM Unit 1206 has two trunk fibre connections 800*a*, 800*b* to the optical fibre ring via the Management MUX/DEMUX 1202 (Figure 2) and the Hub Bypass Switch 1200 (Figure 2). These two trunk fibres 800a, 800b correspond to the two directions around the ring. Note that signals propagate bi-directionally on each of these fibres 800a, 800b, and that one direction around the ring corresponds to the primary path, and the other to the secondary path to provide protection. Therefore in a minimal configuration, only one transmission fibre is required between each pair of adjacent hubs. The network is therefore able to provide bi-directional transmission and protection on a ring comprising single fibre connections.

The CWDM Unit 1206 also has two fibre connections 802*a*, 802*b* to the DWDM MUX/DEMUX Unit 1210 (Figure 2). One function of the CWDM Unit 1206 is to demultiplex blocks of wavelengths received on the trunk fibre connections 800*a*, 800*b* and transfer them to the hub via the fibre connections 802*a*, 802*b*. A second function of the CWDM Unit 1206 is to accept blocks of wavelengths transmitted by the hub via the fibre connections 802*a*, 802*b* and multiplex them onto the trunk fibre connections 800*a*, 800*b*. A third function of the CWDM Unit 1206 is to pass all trunk wavelengths received on the trunk fibre connections 800*a*, 800*b* which are not demultiplexed at the hub across to the opposite trunk fibre connection 800*b*, 800*a* via the Express Traffic path 804. Advantageously, the CWDM Unit 1206 should provide high isolation, i.e. signals destined for the hub traffic fibres 802*a*, 802*b* should not appear in the Express Traffic path 804 and vice versa, and should have low insertion loss, i.e. ring traffic passing between the trunk fibres 800*a*, 800*b* via the Express Traffic path 804 should experience minimum attenuation.

### 2.5 Management Unit 1202, 1204 (Figure 2)

Management information is transmitted between network hubs using a dedicated optical channel at a nominal wavelength of 1510 nm. The Management MUX/DEMUX 1202 (Figure 2) multiplexes and demultiplexes the management channels with the DWDM trunk channels via optical multiplexing and demultiplexing means. The Management Channel Tx/Rx 1204 (Figure 2) transmits and receives the management data.

### 2.6 Hub Bypass Switch 1200 (Figure 2)

The Hub Bypass Switch 1200 (Figure 2) physically connects the ring to the hub and is also used to switch the hub out of the ring while still passing express traffic.

### 2.7 Hub Amplification and Fibre Protection

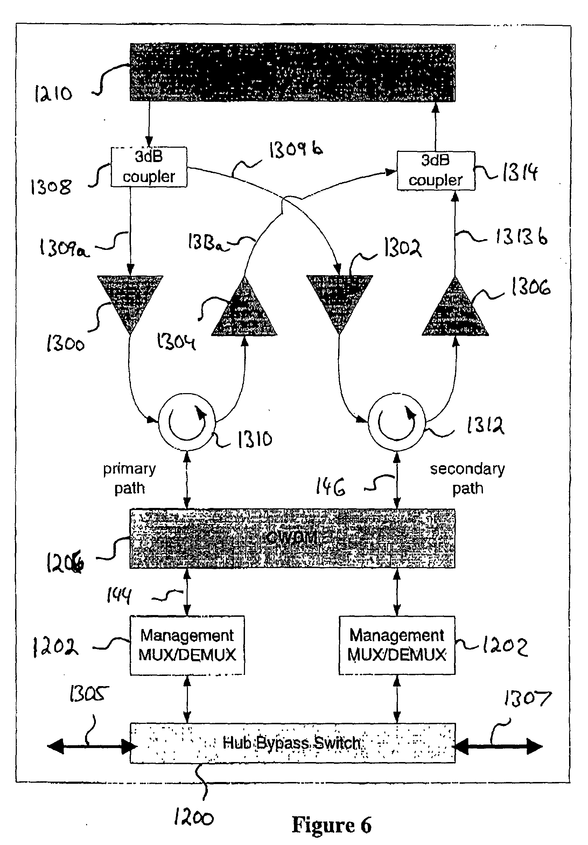

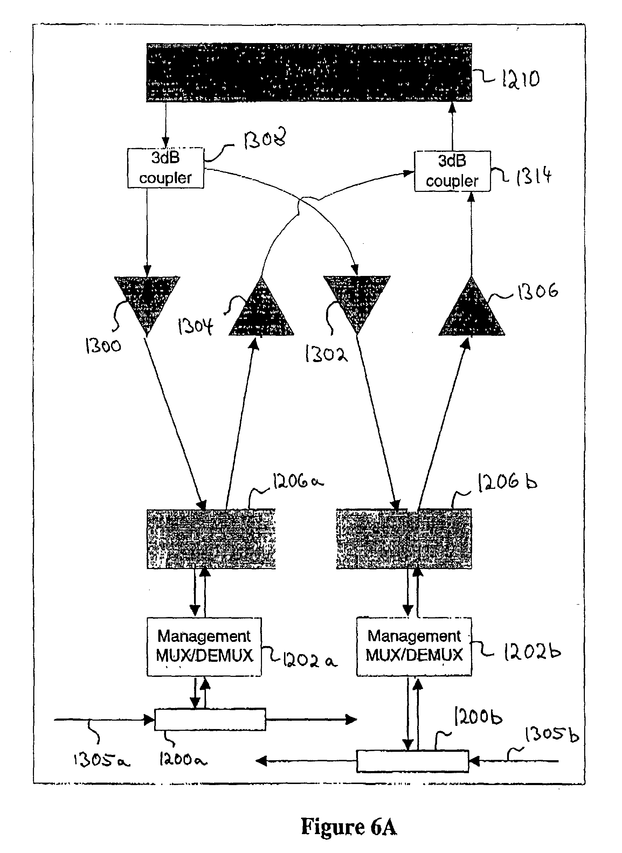

Figure 6 represents a preferred embodiment of a hub configured with optical post-amplifiers 1300, 1302 and pre-amplifiers 1304 1306. Optical signals transmitted via the DWDM MUX/DEMUX Unit 1210 are passed to a first port of the 3 dB coupler 1308. Half of the power is output from a second port of the 3 dB coupler 1308 to a first output path 1309*a*, and half of the power is output from a third port of the 3 dB coupler 1308 to a second output path 1309*b*. Signals on the first path 1309*a* are amplified by the optical post-amplifier 1300, and passed to a first port of an optical circulator 1310. These signals, comprising the Primary Tx Path, are output from a second port of the optical circulator 1310 to the upper left-hand port of the Bi-directional CWDM 1206, from which they are sent onto the primary path 144 of the network 140 via a Management MUX/DEMUX Unit 1202 and the Hub Bypass Switch 1200. Signals on the second path 1309*b* output from the 3 dB coupler 1308 are amplified by the optical post-amplifier 1302, and passed to a first port of an optical circulator 1312. These signals, comprising the Secondary Tx Path, are output from a second port of the optical circulator 1312 to the upper right-hand port of the Bi-directional CWDM 1206, from which they are sent onto the secondary path 146 of the network 140 via a Management MUX/DEMUX Unit 1202 and the Hub Bypass Switch 1200.

Optical signals received from the primary path 144 via the Hub Bypass Switch 1200 and the Management MUX/DEMUX Unit 1202 are output from the upper left-hand port of the Bi-directional CWDM 1206 to the second port of the optical circulator 1310. These signals are output from a third port of the optical circulator 1310 to the optical pre-amplifier 1304. The signals are passed via a first path 1313*a* to a first port of the 3 dB coupler 1314, and output from a second port of the 3 dB coupler 1314 to the WDM MUX/DEMUX Unit 1210. Optical signals received from the secondary path 146 via the Hub Bypass Switch 1200 and the Management MUX/DEMUX Unit 1202 are output from the upper right-hand port of the Bi-directional CWDM 1206 to the second port of the optical circulator 1312. These signals are output from a third port of the optical circulator 1312 to the optical pre-amplifier 1306. The signals are passed via a second path 1313*b* to a third port of the 3 dB coupler 1314, and output from the second port of the 3 dB coupler 1314 to the WDM MUX/DEMUX Unit 1210.

Advantageously, both optical post-amplifiers 1300, 1302 may be active and amplifying signals from both path 1309*a*, 1309*b* for simultaneous transmission along the primary path 144 and the secondary path 146 of the network 140 in either a dual homing or a dual transmission configuration. Advantageously, in the event of a fibre cut on either the primary path 144 or the secondary path 146, the corresponding post-amplifier 1300, 1302 may be deactivated to prevent the emission of hazardous levels of optical radiation at the location of the fibre cut.

Advantageously, only one pre-amplifier 1304 or 1306 is active so that only one of the two paths 1313*a*, 1313*b* is active. The pre-amplifier 1304 or 1306 which is to be activated may be determined either as the pre-amplifier receiving the best quality signal in the case of a dual homing configuration, or by fixed-alternate routing in the case of a dual transmission configuration.

Advantageously, by deploying the optical post-amplifiers 1300, 1302 and pre-amplifiers 1304, 1306, in the manner described, protection switching and optical amplification may be simultaneously effected without the need for additional switching elements.

A suitable method is required to effect protection switching using the optical amplifiers 1300, 1302, 1304, 1306. In a preferred embodiment, the method comprises the following exemplary steps:
- assuming that initially the active path is the primary path 144, a failure of the primary path 144 (e.g. a fibre cut) is detected by the occurrence of a "no signal" condition at the pre-amplifier 1304;
- the pre-amplifier 1304 at which the "no signal" condition is detected is shut down, and the pre-amplifier 1306, which amplifies the signal received from the secondary path 146, is activated;
- the failure of the primary path 144 is communicated to the corresponding transmitting hub via the management channels provided by the Management MUX/DEMUX Unit 1202;
- the post-amplifier 1300 at the transmitting hub corresponding to the failed primary path 144 is deactivated, to prevent the emission of hazardous levels of optical radiation at the location of the fibre cut.

Advantageously, a method may also be provided to deactivate the transmitter in the case of a failure of an inactive path, e.g. the secondary path 146, in order to prevent the emission of hazardous levels of optical radiation at the location of a fibre cut in the inactive path. In a preferred embodiment, the method comprises the following exemplary steps:
- assuming that initially the active path is the primary path 144, a failure of the inactive secondary path 146 (e.g. a fibre cut) is detected by the occurrence of a "no signal'' condition at the pre-amplifier 1306;
- the failure of the secondary path 146 is communicated to the corresponding transmitting hub via the management channels provided by the Management MUX/DEMUX Unit 1202;
- the post-amplifier 1302 at the transmitting hub corresponding to the failed secondary path 146 is deactivated, to prevent the emission of hazardous levels of optical radiation at the location of the fibre cut.

Note that signals propagate bi-directionally on each of the trunk fibres 1305, 1307, and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

However, it is noted that the present invention can also be implemented over a two-fibre structure so as to simplify design for systems using in-line amplifiers (no propagation direction separation required) and to relax isolation requirements in the transmission signals. An example of such an embodiment is shown schematically in Figure 6A, where the network hub comprises two CWDM units 1206A and 1206B each connected to individual hub bypass switches 1200A, 1200B via individual management MUX/DEMUX units 1202A, 1202B respectively.

The hub bypass switches 1200A and 1200B connect to unidirectional fibre links 1305A and 1305B of the optical network respectively, with the transmission directions of the fibre links 1305A and 1305B being opposed to each other.

Furthermore, it will be appreciated by a person skilled in the art that more than one CWDM block and associated DWDM block may be provided within one network hub, preferably with each of the CWDM blocks connected in series via the same management MUX/DEMUX unit. In such an embodiment, a management optical supervisory channel surrounds the CWDM blocks and their associated DWDM blocks, and individual protection is provided for each CWDM/DWDM blocks unit in the same fashion as described above with reference to Figure 6.

### 3 Type B Embodiment 164 (Figure 1d) - Large Ring with Closely Spaced Metro Hubs

Returning to Figure 1d, the Type B embodiment 164 is a ring network in which a cluster of metro hubs 102 exists, consisting of two or more metro hubs located physically close to each other hut physically distant from the core hub 104. The long transmission distance from the metro hubs 102 to the core hub 104 requires optical amplification by one or more amplifiers 170 located along the transmission fibre. An optical amplifier placed in a transmission span to restore the signal level is referred to as a line-amplifier. No line-amplification is required over the short transmission links between metro hubs 102.

At each line-amplifier 170 in a Type B embodiment 164. all signals sent from the metro hub 102 cluster to the core hub 104 will propagate in one direction (i.e. either clockwise or counter-clockwise), whereas all signals sent from the core hub to the metro hub will propagate in the opposite direction. This simplifies the filtering requirements for the line-amplifiers 170 and allows for a wider choice of CWDM, DWDM and interleaving options than in the Type C embodiment 166.

The key characteristies of the Type B embodiment 164 are:
- the distances from the metro hub 102 cluster to the core hub 104 may be increased by use of one or more optical line-amplifiers 170 deployed in the fibre spans linking the metro hub cluster to the core hub;
- the maximum unamplified fibre span, and the maximum distance between line-amplifiers 170 may be increased by using pre- and/or post-amplifiers 168, in addition to the line-amplification;
- the maximum distances between metro hubs 102 in the cluster, and the maximum number of metro hubs 102 in the cluster, are limited by the optical power budget. Advantageously, components and fibre with low attenuation should be employed;
- transmission distances between the metro hub 102 cluster and the core hub 104 may be sufficiently long that chromatic dispersion is a limiting factor. Advantageously, long-haul lasers may be employed to ensure optimum performance;
- advantageously, bi-directional line-amplifiers 170 may be employed which have been designed to prevent the onset of lasing in the presence of external reflections, signal failures, fibre-cuts and so on;
- advantageously, the line-amplifiers 170 may be fully-managed network hubs;
- optical post-, pre- and line-amplifiers 168. 170 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following the hub and amplifier designs in the Type B embodiment 164, which is a ring network in which there exists a cluster of metro hubs that are physically close to each other but physically distant from the core hub, will be described in more detail. One or more optical line amplifiers 170 are required to transmit signals from the clustered metro hubs over the long transmission distances to the core hub.

Each of the hubs may also comprise post- and/or pre-amplifiers as for the Type A embodiment.

Due to the longer transmission distances in the Type B embodiment the optical signal to noise ratio (OSNR) of signals potentially becomes the limiting factor to ring size (or more specifically the core hub to metro hub distance). Dispersion may also be a factor over longer transmission distances, in which case long-haul laser sources may be advantageously employed to enable unrepeated transmission between the metro hubs and the core hub.

### 3.1 Overview of Hub Structure in the Type B Embodiment

The hub structure in the Type B embodiment is the same as that of the Type A embodiment as shown in Figure 2.

### (a) Line amplifiers 170 (Figure 1d)

In order to allow for fully-protected transmission on a single optical fibre in the case of e.g. a fibre break, the optical ring network 140 (Figure 1d) must support bi-directional transmission, i.e. transmission in both the clockwise and counter-clockwise directions from the metro hubs 102 (Figure 1d) to the core hub 104 (Figure 1d) and vice-versa. In the Type 1 and Type A embodiments, the ring comprises only optical fibre which has no preferred propagation direction and thus is inherently bi-directional. However, optical amplifiers are not in general bi-directional devices, and therefore the line amplifiers must be designed specifically to support bi-directional propagation in the preferred embodiment. If two fibres arc used to support bi-directional transmission then conventional uni-directional amplifiers can be used.

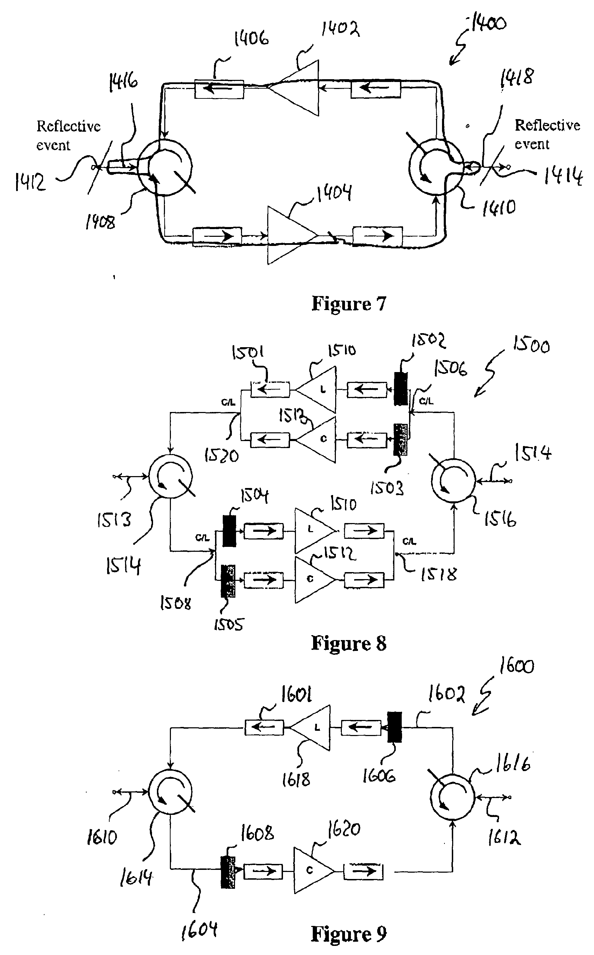

Figure 7 shows schematically a simple bi-directional amplifier design 1400. The bi-directional amplifier 1400 comprises two unidirectional amplifiers 1402, 1404. Isolators 1406 are used to ensure unidirectional propagation of light within each amplifier. Signals entering the bi-directional amplifier from the left-hand fibre 1416 are passed by the circulator 1408 to the lower amplifier 1404, where they are amplified and then passed by the circulator 1410 to the right-hand fibre 1418. Signals entering the bi-directional amplifier from the right-hand fibre 1418 are passed by the circulator 1410 to the upper amplifier 1402, where they are amplified and then passed by the circulator 1408 to the left hand fibre.

A potential problem arises in a bi-directional amplifier with the structure shown in Figure 7 if a network fault condition or other fibre imperfection exists resulting in points of reflection 1412, 1414 on both sides of the bi-directional amplifier 1400. In this case, the reflected light is able to circulate within the bi-directional amplifier 1400. If the double pass gain experienced is higher than the loss from the dual reflective events 1412, 1414 parasitic lasing will occur, degrading the performance of the bi-directional amplifier 1400, and hence degrading the network performance.

Advantageously the chosen CWDM Band Allocation scheme may be utilised in the design of a bi-directional amplifier in which parasitic lasing cannot occur. Figure 8 shows an exemplary bi-directional amplifier 1500 that is designed to amplify selected bands in each direction, in both the C-band and the L-band. Since most commercially available optical amplifiers amplify only within one band, the C+L-band bi-directional amplifier 1500 comprises L-band amplifiers 1510 and C-band amplifiers 1512 in each direction.

Signals entering the bi-directional amplifier 1500 from the left-hand fibre 1513 are passed by the circulator 1514 to the lower path in which they enter the C/L-Band splitter 1508. All signals within the L-band are passed to the L-band filter 1504, while all signals within the C-band are passed to the C-band filter 1505. The pass bands of the L-band and C-band filters 1504, 1505 are determined by the CWDM Band Allocation scheme used. The signals are amplified in the L and C-band amplifiers 1510, 1512, recombined in the C/L band coupler 1518, and then output via the circulator 1516 to the right-hand fibre 1514.

Signals entering the bi-directional amplifier 1500 from the right-hand fibre 1514 are passed by the circulator 1516 to the upper path in which they enter the C/L-Band splitter 1506. All signals within the L-band are passed to the L-band filter 1502, while all signals within the C-band are passed to the C-band filter 1503. The pass bands of the L-band and C-band filters 1502, 1503 are determined by the CWDM Band Allocation scheme used. The signals are amplified in the L and C-band amplifiers 1510, 1512, recombined in the C/L band coupler 1520, and then output via the circulator 1514 to the left-hand fibre 1513.

Advantageously, in this arrangement the L-band filters 1502, 1504 and the C-band filters 1502, 1503 pass different bands in the two directions so that reflections on either side of the bi-directional amplifier 1500 do not result circulation of light, and hence parasitic lasing is avoided.

Figure 9 shows an exemplary bi-directional amplifier 1600 that is designed to amplify the C-hand in one direction, e.g. left to right, and the L-band in the other direction, e.g. right to left.

Signals entering the bi-directional amplifier 1600 from the left-hand fibre 1610 are passed by the circulator 1614 to the lower path 1604 in which they are filtered by a C-band filter 1608 and amplified by a C-band amplifier 1620. They are then passed via the circulator 1616 to the right-hand fibre 1612.

Signals entering the bi-directional amplifier 1600 from the right-hand fibre 1612 are passed by the circulator 1616 to the upper path 1602 in which they are filtered by an L-band filter 1606 and amplified by a L-band amplifier 1618. They are then passed via the circulator 1614 to the right-hand fibre 1610.

It will be appreciated that other embodiments of the bi-directional amplifiers 1500, 1600 are possible, including those derived by a simple re-ordering of the optical components, without departing from the scope of the present invention. Furthermore, the isolators e.g. 1501 (Figure 8) and e.g. 1601 (Figure 9) may be removed as the circulators already act as isolators. Those "additional" isolators are, however, already incorporated in most commercial EDFAs.

### (b) CWDM Unit, Type B variant

The physical design of the CWDM Unit is the same for the Type B embodiment 164 (Figure 1d) as for the Type A embodiment 162 (Figure 1d). However, the power of each signal within each CWDM Band must be similar when entering an optical amplifier. If one or more hands, or one or more signals within a band, have higher power than the others then they may saturate the gain of the amplifier resulting in a smaller gain being experienced by the weaker bands or signals. This may result in the weaker signals experiencing reduced OSNR, and hence degraded performance.

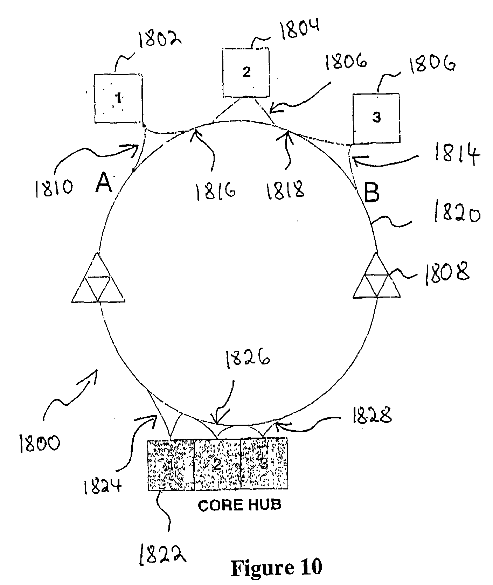

Figure 10 illustrates this problem in an exemplary Type B embodiment 1800. Considering channels transmitted from the three metro hubs 1802, 1804, 1806 to the core hub 1822 in a clockwise direction, it is apparent that the signals sent from the metro hub 1802 must travel further than signals sent from the metro hubs 1804, 1806. After being added to the ring via the CWDM Unit 1810, channels from the metro hub 1802 suffer additional attenuation in the three fibre spans 1816, 1818, 1820, and the CWDM Units 1812, 1814 before arriving at the line amplifier 1808. Channels from the metro hub 1804 suffer attenuation in only two fibre spans 1818, 1820 and one CWDM Unit 1814 before arriving at the line amplifier 1808. Channels from the metro hub 1806 suffer attenuation in only the fibre span 1820 before arriving at the line amplifier 1808. Thus the power transmitted from the metro hub 1802 is preferably higher than the power transmitted from the metro hub 1804, which in turn is preferably higher than the power transmitted from the metro hub 1806, so that the power of all signals in the corresponding CWDM bands is equalised at the input of the line amplifier 1808.

A similar problem arises in transmission from the core hub 1822 to the metro hubs 1802, 1804, 1806. Considering transmission in the counter-clockwise direction signals sent via the core hub CWDM Units 1824, 1826, 1828 should have the same power level at the input to the fibre span 1830, in order to arrive at the input of the line amplifier 1808 with equalised power levels. However, in this case the signals reaching the metro hub 1802 will be weaker than those reaching the metro hub 1804, which will be weaker in turn than those reaching the metro hub 1806. Thus the metro hubs 1802, 1804, 1806 are preferably designed to tolerate the resulting range of received signal powers. Alternatively, signals may be transmitted from the core hub 1822 with different power levels so that they are received at the metro hubs 1802, 1804, 1806 with similar power levels. In this case, the power at the input to the line amplifier 1808 will not be equalised, and there will accordingly be a range of OSNR's received at the metro hubs 1802, 1804, 1806, with the metro hub 1802 receiving the highest-quality signal, and the metro hub 1806 receiving the lowest-quality signal. This is because the signal destined to node 1802 has the highest power at the line amplifier 1808 and so has the best OSNR. Accordingly, the network is preferably designed to be tolerant of the resulting range of received OSNR.

If the power and OSNR requirements for transmission from the metro hubs 1802, 1804, 1806 to core hub 1822, and from the core hub 1822 to metro hubs 1802, 1804, 1806 cannot be simultaneously satisfied then the network may not be designed in accordance with the principles of the Type B embodiment, and may instead be designed in accordance with the principles of the Type C embodiment.

Note that signals propagate bi-directionally on each of the trunk fibres e.g. 1820, 1830 and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

However, it is noted that the present invention can also be implemented over a two-fibre structure so as to simplify design for systems using in-line amplifiers (no propagation direction separation required) and to relax isolation requirements in the transmission signals.

### 4 Type C Embodiment 166 (Figure 1d) - Large Ring/Fully Flexible Solution

Returning to Figure 1d, the Type C embodiment 166 is a ring network in which the spacing between any metro hub 102 and the core hub 104, and the spacing between any two adjacent metro hubs 102, may be large. Optical post- and/or pre-amplifiers 168 may be required at any hub node 102. 104. One or more optical line-amplifiers 170 may be required within any fibre span.

The key characteristics of the Type C embodiment 166 are:
- the distances between any pair of hubs 102, 104 may be increased by use of one or more optical line-amplifiers 170 deployed in one or more of the fibre spans comprising the ring network;
- the maximum unamplified fibre span, and the maximum distance between line-amplifiers 170 may be increased by using pre- and/or post-amplifiers 168, in addition to the line-amplification;
- transmission distances between the metro hubs 102 and the core hub 104 may he sufficiently long that chromatic dispersion is a limiting factor. Advantageously, long-haul lasers may be employed to ensure optimum performance;
- advantageously, bi-directional line-amplifiers 170 may be employed which have been designed to prevent the onset of lasing in the presence of external reflections, signal failures, fibre-cuts and so on;
- advantageously, the line-amplifiers 170 may he fully-managed network hubs;
- optical post-, pre- and line-amplifiers 168, 170 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following, modifications to the hub and line amplifier designs that are advantageous in the implementation of the Type C embodiment 166 are described in more detail. The Type C embodiment 166 is a ring network in which the spacing between any metro hub 102 and the core hub 104, and the spacing between any two adjacent metro hubs 102, may be large. The Type C embodiment 166 comprises optical pre, post and line amplifiers as required to provide the flexibility to implement a network limited only by the effects of dispersion, OSNR degradation and other transmission impairments, regardless of the distances separating the core and hub nodes. In particular, the Type C embodiment 166 enables networks of up to at least 500 km total length to be implemented, however it will be appreciated that in many applications the Type C embodiment 166 may comprise a ring network of greater total length.

Many of the design principles of the Type C embodiment are similar to those of the Type B embodiment. In general, the line amplifier design 1500 shown in Figure 8 is required in the Type C embodiment, since the propagation direction of different CWDM bands is generally different between adjacent pairs of metro hubs.

Advantageously, since all channels may require periodic amplification the hub post-amplification function may be combined with the line amplification function in a configuration hereafter known as an "inline hub amplifier". The use of inline hub amplifiers may allow the network operator to install all equipment at a single site, i.e. additional sites may not be required for line amplifiers. The use of inline hub amplifiers may also simplify the management of a network fault, such as a fibre cut, and may allow the total number of amplifiers in the network to be reduced.

### 4.1 Inline Hub Amplifier Configuration 1904

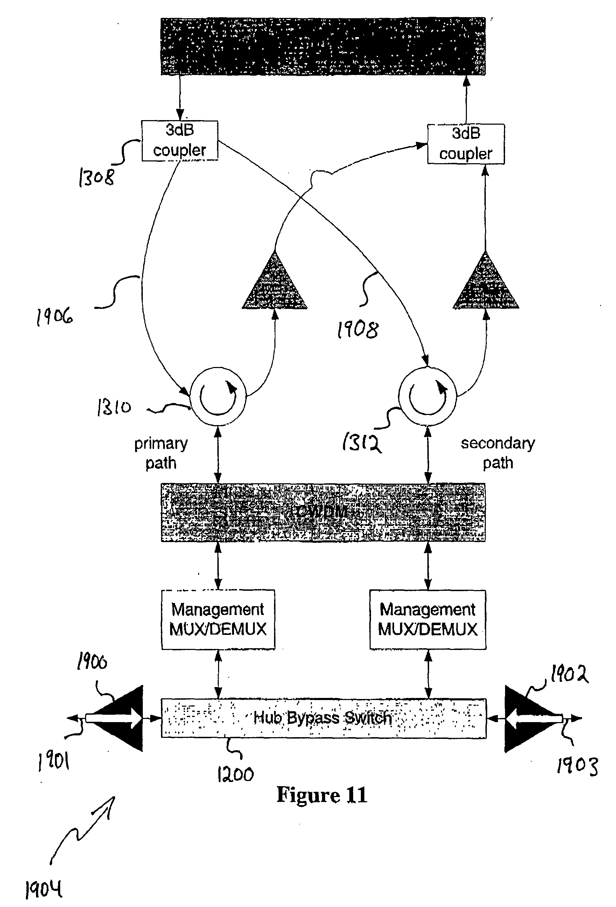

Figure 11 shows the Inline Hub Amplifier Configuration 1904 at a metro hub 102 (Figure 1d). The overall hub configuration is similar to that of the Type A Embodiment shown in Figures 2 and 6. However, the hub post amplifiers 1300, 1302 have been removed and replaced with fibre connections 1906, 1908 between the 3-dB Coupler 1308 and the circulators 1310, 1312. Bi-directional uni-amplification amplifiers 1900, 1902 have been added on either side of the Hub Bypass Switch 1200. Advantageously the bi-directional uni-amplification amplifiers 1900, 1902 act as post amplifiers for the outgoing hub traffic, and as line amplifiers for the express traffic that bypasses the hub. Note that the bi-directional uni-amplification amplifiers 1900, 1902 function as line amplifiers for express traffic even if the Hub Bypass Switch 1200 is closed, isolating the hub from the network.

Note that signals propagate bi-directionally on each of the trunk fibres 1901, 1903, and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

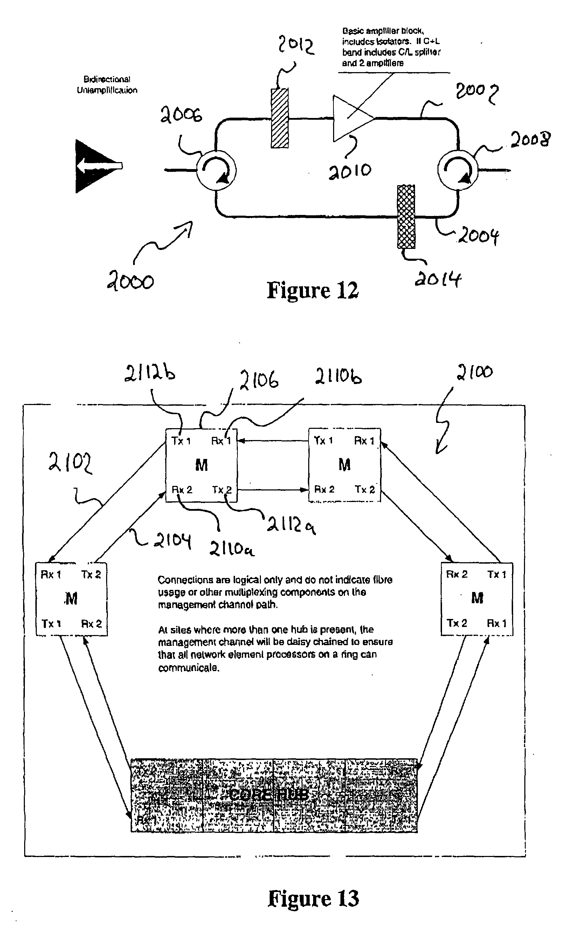

The structure 2000 of the bi-directional uni-amplification amplifiers 1900, 1902 is shown in Figure 12. In the structure 2000, there are provided 2 optical paths 2002, 2004 between different ports of 2 circulators 2006, 2008. Only one of the optical paths, 2002, comprises an amplifier 2010, while both optical paths 2002, 2004 comprise filters 2012, 2014 to prevent parasitic lasing of the amplifier structure 2000. The amplifier 2010 may comprise input and output optical isolators. The amplifier 2010 may further comprise a single C-band amplifier, a single L-band amplifier or dual C+L band amplifiers, C/L band splitter and combiner and associated filters, similar to the bi-directional amplifier structure 1500 (Figure 8).

The benefits of the Inline Hub Amplifier Configuration 1904 may be summarised as follows:
- Advantageously, it may be possible to co-locate some or all inline amplifíers at hubs, obviating the need to install line amplifiers in the field.
- Advantageously. the management of a network failure such as, e.g. a fibre cut, is simplified- the only action required at the hubs is to turn off the in-line hub amplifiers adjacent to the cut.
- Advantageously, the bi-directional uni-amplilication amplifiers 1900, 1902 replace the post-amplifiers 1300, 1302 while also performing the function of line amplification for express traffic. Hence the number of amplifiers in the network may be reduced.

### 5 Optical Management Channel

Advantageously, all embodiments of the optical ring network may comprise a Management Network which overlays the physical and logical topology of the data communication network. The management network enables all Managed Network hubs within the network to be monitored and/or controlled from a Management Terminal. A Managed Network hub may comprise e.g. a metro hub, a core hub or a line amplifier. The Management Terminal may be connected directly to a Managed Network hub, integrated within a Managed Network huh, or located remotely from the network a connected e.g. via a dedicated management network connection or via a publicly accessible network such as the Internet.

The logical connectivity of the Management Network 2100 is shown in Figure 13. The Management Network 2100 comprises two logical channels counter-propagating within the network. Advantageously, the use of two counter-propagating channels ensures that communication of management information between any pair of network hubs is not interrupted in the case of any single failure such as e.g. a fibre cut. Each counter-propagating channel consists of a set of point-to-point links, e.g. 2102, 2104, connecting adjacent Managed Network hubs, e.g. 2106. Thus each Managed Network hub 2106 comprises two management receivers 2110*a*, 2110*b* and two management transmitters 2112*a*, 2112*b*. Some terminal equipment, e.g. a Core Hub 2108, may contain multiple Managed Network hubs, in which case the connectivity between these elements is effected internally, and the terminal equipment still has only two sets of management transmitters and receivers.

Within each Managed Network huh, the management signals are multiplexed and demultiplexed with the data signals on each fibre by the Management MUX/DEMUX Unit, 1202 (Figure 2).

Advantageously, since the management channel connections e.g. 2102, 2104, are established between adjacent Managed Network hubs, they are fully regenerated at each Managed Network hub, and do not require optical amplification.

Advantageously, the management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

Advantageously, in order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

Advantageously, the management channel may comprise relatively low bit-rate signals, e.g. around 100 Mb/s, so that dispersion and power budget for the management signals do not restrict the maximum distance between Managed Network hubs.

Advantageously, the transmission format of the management signals may comprise standard local-area network protocols, e.g. full-duplex 100 Mb/s Fast Ethernet protocols, so that the management channel connections may be implemented using low-cost commodity hardware.

Advantageously, the Management MUX/DEMUX Units 402 (Figure 3), 1202 (Figure 10) should present minimal insertion loss to non-management channels, in order to maximise the power budget available for data signal transmission.

In the following paragraphs, example scenarios will be described illustrating how protection switching can be effected through suitable powering up and shutting down of pre-amplifiers and/or post-amplifiers in preferred embodiments of the present invention. In the following description, it is assumed that the primary path is the shortest distance between two nodes.

### 6 Fibre break in Type A embodiment 162 (Figure 1d) between metro hubs

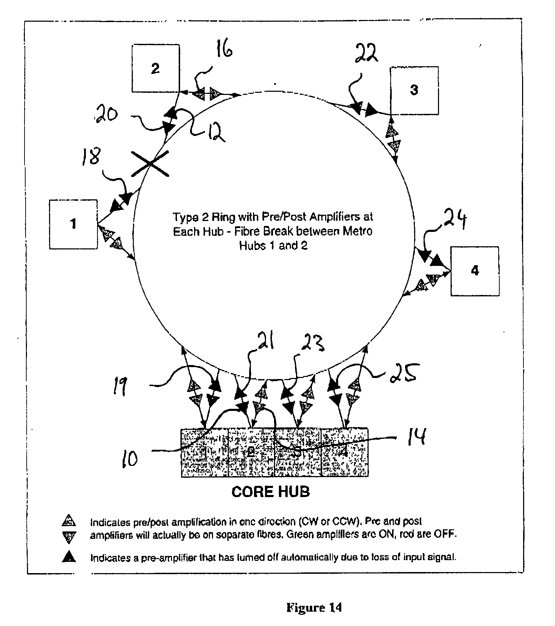

In the event of a cable cut between Metro Hubs 1 and 2 (as shown in Figure 14), the primary pro-amplifiers 10,12 at Core Hub 2 and Metro Hub 2 respectively will shut themselves down because there is no longer any input signal. (This is an automatic feature of many available optical amplifiers.) The secondary pre-amplifiers 14, 16 at these respective hubs must then he turned on. Time to restore traffic will depend on the time required for the pre-amplifiers 14, 16 to be turned on and for signal output powers to stabilise. After (or at the same time as) the secondary pre-amplifiers 14, 16 are switched on, the management channel must send signals to the other hubs instructing them to turn off other post amplifiers. Shutting down these amplifiers will ensure that light levels at the fibre cut are minimised. As shown in Figure 14, the following amplifiers must be turned off:
Metro Hub 1 - post-amplifier 18 facing clock wise (CW);
Core Hub 1 - post-amplifier 19 facing counter clock wise (CCW);
Metro Hub 2 - post-amplifier 20 facing CCW (pre-amp 12 automatically off);
Core Hub 2 - post-amplifier 21 facing CW (pre-amp 10 automatically off);
Metro Hub 3 - post-amplifier 22 facing CCW;
Core Hub 3 - post-amplifier 23 facing CW;
Metro Hub 4 - post-amplifier 24 facing CCW;
Core Hub 4 - post-amplifier 25 facing CW.

Once the fibre cut is repaired, these post amplifiers can be turned back on. Hub 2 traffic may continue to be carried on the secondary path, or may be restored to the primary path.

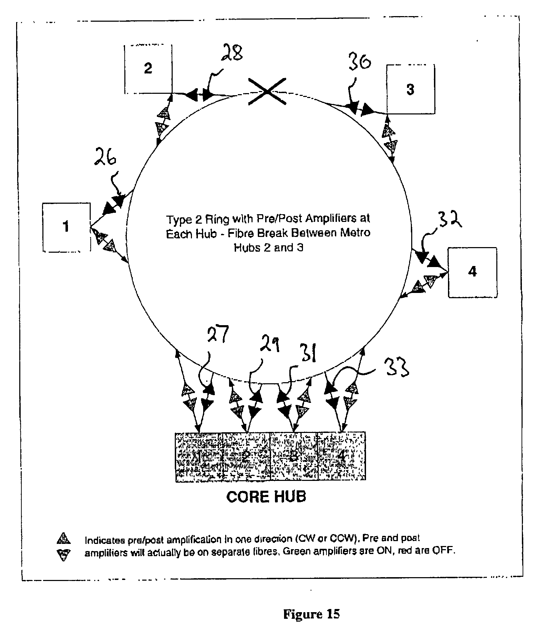

In the event of a fibre cut between Metro Hubs 2 and 3, no traffic will need to be rerouted hut some of the post-amplifiers will have to be turned off to minimise optical power levels at the fibre cut. As shown in Figure 15, the following amplifiers need to be turned off:
Metro Hub 1 - post-amplifier 26 facing CW;
Core Hub 1 - post-amplifier 27 facing CCW;
Metro Hub 2 - post-amplifier 28 facing CW;
Core Hub 2 - post-amplifier 29 facing CCW;
Metro Hub 3 - post-amplifier 30 facing CCW;
Core Hub 3 - post-amplifier 31 facing CW;
Metro Hub 4 - post-amplifier 32 facing CCW;
Core Hub 4 - post-amplifier 33 facing CW.

These amplifiers can be turned back on (without affecting customer traffic) after the cut has been repaired.

### 7 Pre or post amplifier failure in Type A embodiment 162 (Figure 1d)

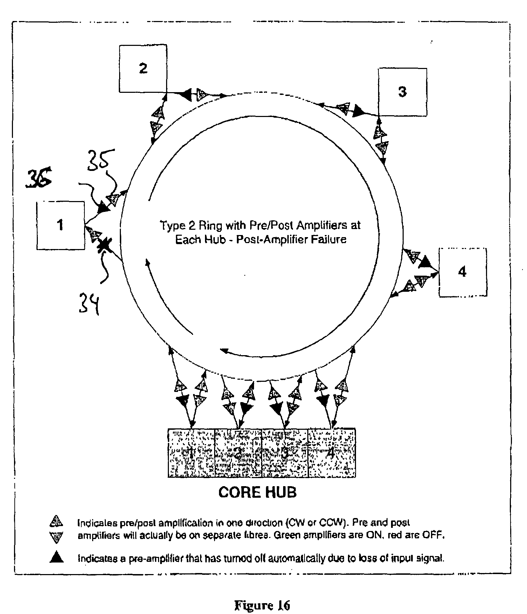

Another fault scenario is one in which a post-amplifier or pre-amplifier fails. This is shown in Figures 16, 17 and Figure 18 respectively. In the case of post-amplifier failure on the primary path, the primary pre-amplifier will automatically shut down due to loss of input signal. Management channel traffic between Metro Hub 1 and the Core Hub should not be affected by this failure. Therefore, loss of signal at the Core Hub without simultaneous loss of the management signal will enable the management platform at the core hub to distinguish between an amplifier failure and a fibre cut. This will be true for a fibre cut occurring between the hub at which loss is detected and an adjacent network hub or in-line amplifier. If the fibre cut would occur beyond an adjacent in-line amplifier, the management signal would still be received as transmitted from the adjacent in-line amplifier.

Where the fibre cut occurs beyond the adjacent in-line amplifier, the distinction cannot be made only by reference to analysis of the signals received at the core hub. However, it will be appreciated by the person skilled in the art that the management system implemented for the entire optical network does have access to the management platforms at each of the hubs of the optical network. Thus, through appropriate analysis of concurrent status reports at various network hubs and in-line amplifiers, a distinction between an amplifier failure and a fibre cut can still be made by the overall network management system.

In this example, the Metro Hub 1 post-amp 34 has failed. There are two options that must be considered for working around this failure. The first is depicted in Figure 16. In this case, the secondary post-amplifier 35 remains turned on. All post-amplifiers (with the exception of the failed amplifier) remain on and the secondary pre-amplifier 36 at Metro Hub 1 remains off. This results in unidirectional transmission for Hub 1 only. Traffic from the Metro Hub 1 to the Core is transmitted over the secondary path while traffic from the Core to the Metro Hub 1 continues to be transmitted on the primary path.

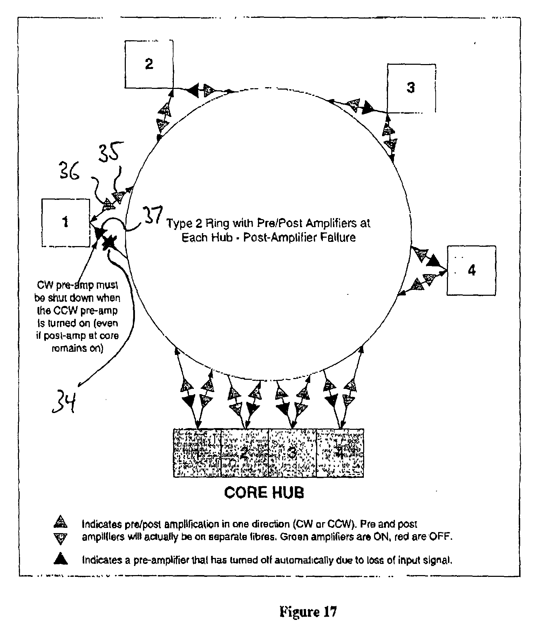

If Option 2 is implemented instead, all Hub 1 traffic is switched to the secondary path Figure 17. In order to prevent interference at the receiver (ie. receiving same signal from both pre-amps but with a time delay due to different transmission paths) the primary pre-amplifier 37 at the Metro Hub 1 must also be shut down when the secondary pre-amplifier 36 is turned on.

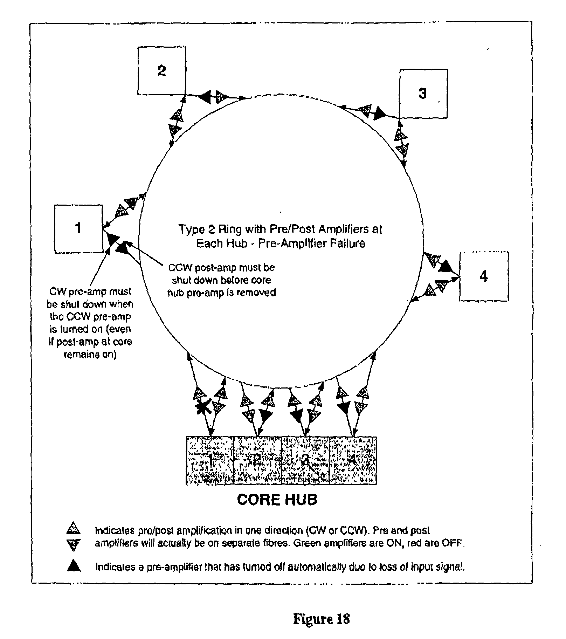

When a pre-amplifier fails (Figure 18), a similar scenario to that of post-amplifier failure occurs, except that no amplifiers are automatically shut down. Note that in either case, an amplifier failure at one hub will not affect traffic at any of the other Core/Metro Hub pairs. This holds true for Type B and C rings as well. Only failure of an amplifier on the main fibre ring will affect multiple Core/Metro Hub pairs.

### 8 Fibre failure in Type B embodiment 164 (Figure 1d) - example 1

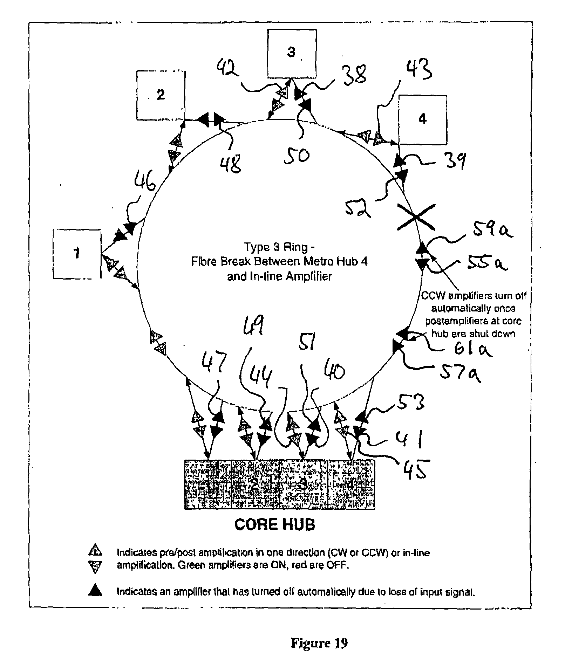

In the event of a cable cut between Metro Hub 4 and an in-line amplifier (as shown in Figure 19), the primary pre-amplifiers 38, 39, 40, 41 at Metro Hubs 3 and 4 and Core Hub respectively and clockwise in-line amplifiers 55A, 57A will shut themselves down because there is no longer any input signal. (This is the automatic feature mentioned above.) The secondary pre-amplifiers 42, 43, 44, 45 at these hubs must then be turned on. Time to restore traffic will depend on the lime required for the pre-amplifiers 42, 43, 44, 45 to be turned on and for signal output powers to stabilise. After the secondary pre-amplifiers 42, 43, 44, 45 are switched on, the management channel must send signals to the other hubs instructing them to turn off some post amplifiers. Shutting down these amplifiers will ensure that light levels at the fibre cut are minimised. As shown in Figure 19, the following amplifiers must be turned off:
Metro Hub 1 - post-amplifier 46 facing CW;
Core Hub 1 - post-amplifier 47 facing CCW;
Metro Hub 2 - post-amplifier 48 facing CW;
Core Hub 2 - post-amplifier 49 facing CCW;
Metro Hub 3 - post-amplifier 50 facing CW (pre-amp 38 automatically off):
Core Hub 3 - post-amplifier 51 facing CCW (pre-amp 40 automatically off);
Metro Hub 4 - post-amplifier 52 facing CW (pre-amp 39 automatically off);
Core Hub 4 - post-amplifier 53 facing CCW (pre-amp 41 automatically off).
The CCW in-line amplifiers 59A, 61A will also automatically go off after the post amplifiers at their input site are turned off, as there is no longer any input signal.

### 9 In-line amplifier failure in Type B embodiment 164 (Figure 1d)

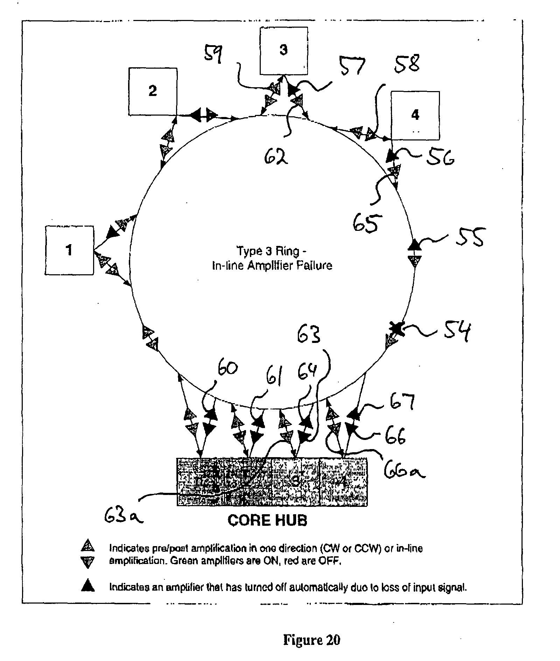

In the event of a CCW in-line amplifier 54 failure (as shown in Figure 20), the cascaded in-line amplifier 55 and the primary pre-amplifiers 56, 57 at Metro Hubs 3 and 4 will shut themselves down because there is no longer any input signal. (This is the automatic feature mentioned above.) The secondary pre-amplifiers 58, 59 at these hubs 3, 4 respectively must then be turned on. Time to restore traffic will depend on the time required for the pre-amplifiers 58, 59 to be turned on and for signal output powers to stabilise. After the secondary pre-amplifiers 58, 59 are switched on, the management channel must send signals to the other hubs instructing them to turn off some pre and post amplifiers. The pre-amplifiers must be shut down to prevent interference at the Core Hub. The post amplifiers must be shut down to ensure safe power levels at the in-line amps when the modules are replaced. As shown in Figure 20, the following amplifiers must be turned off:
Metro Hub 1 - none, unless CW post-amp needs to be shut down before in-line amplifier module removed;
Corc Hub 1 - post-amplifier 60 facing CCW;
Metro Hub 2 - none, unless CW post-amp needs to be shut down before in-line amplifier module removed;
Core Hub 2 - post-amplifier 61 facing CCW;
Metro Hub 3 - CW pre-amp 57 automatically off, post-amp 62 may need to be shut down before in-line amplifier module removed;
Core Hub 3 - pre and post-amplifier 63. 64 facing CCW pre-amplifier 63A turned on;
Metro Hub 4 - CW pre-amp 56 automatically off, post-amp 65 may need to be shut down before in-line amplifier module removed;
Core Hub 4 - pre and post-amplifier 66, 67 facing CCW pre-amplifier 66A turned on.

Switching requirements are similar when in-line amplifiers fail on Type C embodiment 166 (Figure 1d) rings.

### 10 Fibre failure in Type C embodiment 166 (Figure 1d) - example 1

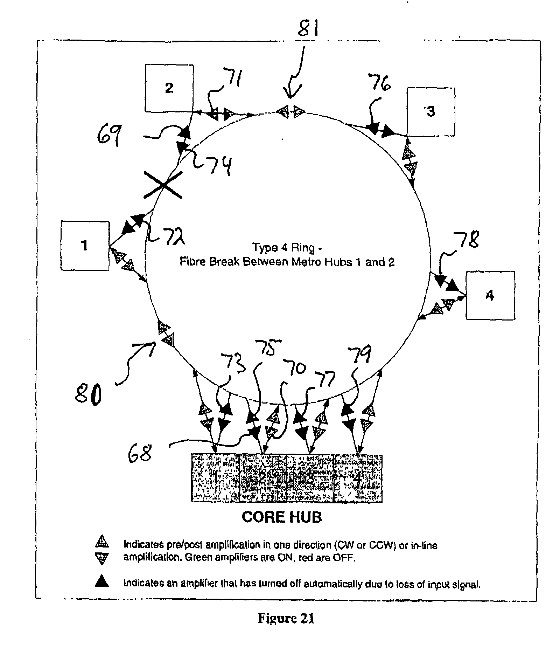

In the event of a cable cut between Metro Hubs 1 and 2 (as shown in Figure 21), the primary pre-amplifiers 68, 69 at Core Hub 2 and Metro Hub 2 will shut themselves down because there is no longer any input signal. (This is the automatic feature mentioned above.) The secondary pre-amplifiers 70, 71 at these hubs must then be turned on. Time to restore traffic will depend on the time required for the pre-amplifiers 70, 71 to be turned on and for signal output powers to stabilise. After the secondary pre-amplifiers 70, 71 are switched on, the management channel must send signals to the other hubs instructing them to turn off other post amplifiers. Shutting down these amplifiers will ensure that light levels at the fibre cut are minimised. As shown in Figure 21, the following amplifiers must be turned off:
Metro Hub 1 - post-amplifier 72 facing CW;
Core Hub 1 - post-amplifier 73 facing CCW;
Metro Hub 2 - post-amplifier 74 facing CCW (pre-amp automatically off);
Core Hub 2 - post-amplifier 75 facing CW (pre-amp automatically off);
Metro Hub 3 - post-amplifier 76 facing CCW;
Core Hub 3 - post-amplifier 77 facing CW;
Metro Hub 4 - post-amplifier 78 facing CCW;
Core Hub 4 - post-amplifier 79 facing CW.

Neither of the in-line amplifiers 80, 81 should be turned off because both are still required to carry traffic. As a result there may be some Amplified Spontaneous Emission (ASE) at the fibre cut, but the ASE power level should be within laser class 1 and owing to the shut down of the post-amplifiers listed above, no hub traffic should be transmitted towards the cut. In addition, the in-line amplifiers 81 between Metro Hubs 2 and 3 will now only be receiving 25% of the signal power that they received before (assuming each hub has an equal number of duplex channels). Similarly, the in-line amplifiers 80 between Metro Hub 1 and the Core will only receive 25% of the signal power that they receive under normal operating conditions. If these amplifiers 80, 81 are set for constant output power, the received signal power at each of the hubs will increase (ie. fewer amplified channels means greater gain for each channel).

### 11 Fibre failure in Type C embodiment 166 (Figure 1d) - example 2

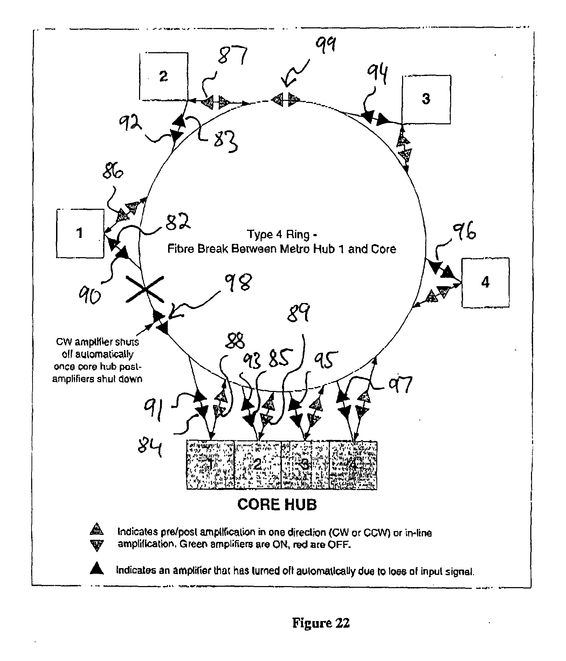

In the event of a cable cut between Metro Hub 1 and the Core Hub (as shown in Figure 22), the primary pre-amplifiers 82, 83, 84, 85 at Metro Hubs 1 & 2 and Core Hubs 1 & 2 respectively will shut themselves down because there is no longer any input signal. (This is the automatic feature mentioned above.) The secondary pre-amplifiers 86, 87, 88, 89 at these hubs must then be turned on. Time to restore traffic will depend on the time required for the pre-amplifiers 86-89 to be turned on and for signal output powers to stabilise. After the secondary pre-amplifiers 86-89 are switched on, the management channel must send signals to the other hubs instructing them to turn off other post amplifiers. Shutting down these amplifiers will ensure that light levels at the fibre cut are minimised. As shown in Figure 22, the following amplifiers must be turned off:
Metro Hub 1 - post-amplifier 90 facing CCW (pre-amp 82 automatically off);
Core Hub 1 - post-amplifier 91 facing CW (pre-amp 84 automatically off);
Metro Hub 2 - post-amplifier 92 facing CCW (pre-amp 83 automatically off);
Core Hub 2 - post-amplifier 93 facing CW (pre-amp 85 automatically off);
Metro Hub 3 - post-amplifier 94 facing CCW;
Core Hub 3 - post-amplifier 95 facing CW;
Metro Hub 4 - post-amplifier 96 facing CCW;
Core Hub 4 - post-amplifier 97 facing CW.

In addition, the in-line amplifier 98 between Metro Hub 1 and the Core Hub will shut down automatically due to loss of input signal (preventing high levels of ASE at the cut). In this case, the in-line amplifier 99 between Metro Hubs 2 and 3 remains on and there is no change to input signal levels, ie. no change to channel gains.

Note that in either case. once the fibre cut is repaired, these post and in-line amplifiers can be turned back on. Hub 2 and/or Hub 1 traffic may continue to be carried on the secondary path, or may be restored to the primary path.

### 12 Fibre failure in Type C embodiment 166 (Figure 1d) - example 3

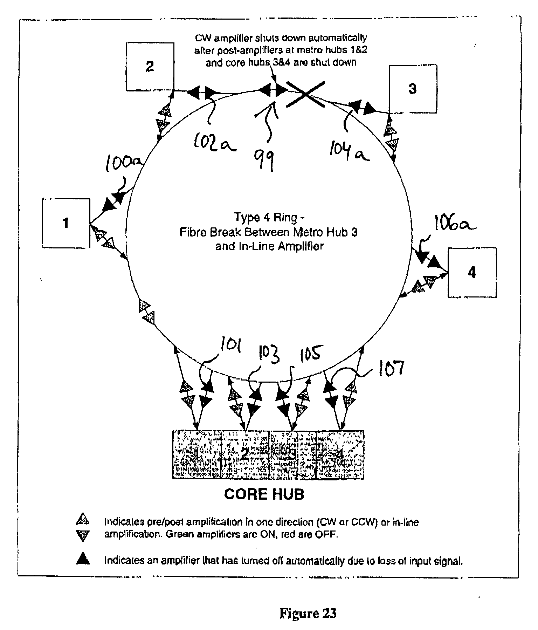

In the event of a cable cut between Metro Hub 3 and the in-line amplifier 99 (as shown in Figure 23), only the in-line amplifier 99 will shut itself down because there is no longer any input signal. (The CCW amplifier shuts down straight away and the CW amplifier shuts down after secondary post-amplifiers are turned off.) No pre-amplifiers need to be switched on or off because none of the hubs switch traffic from primary to secondary path. However, the protected path for all hubs is lost until the fibre cut can be repaired. Complete loss of the management channel between Metro Hub 3 and in-line amplifier 99 should trigger the shut down of the listed hub post-amplifiers to ensure that light levels at the fibre cut are minimised. As shown in Figure 23, the following amplifiers must be turned off:
Metro Hub 1 -post-amplifier 100a facing CW;
Core Hub 1 - post-amplifier 101 facing CCW;
Metro Hub 2 - post-amplifier 102a facing CW;
Core Hub 2 - post-amplifier 103 facing CCW;
Metro Hub 3 - post-amplifier 104a facing CCW;
Core Hub 3 - post-amplifier 105 facing CW;
Metro Hub 4 - post-amplifier 106a facing CCW;
Core Hub 4 - post-amplifier 107 facing CW.

After the fibre cut is repaired, the amplifiers listed above can be turned back on without affecting customer traffic.

### 13 Fibre failure in Type C embodiment 166 (Figure 1d) with in-line hub amplifiers - example 1

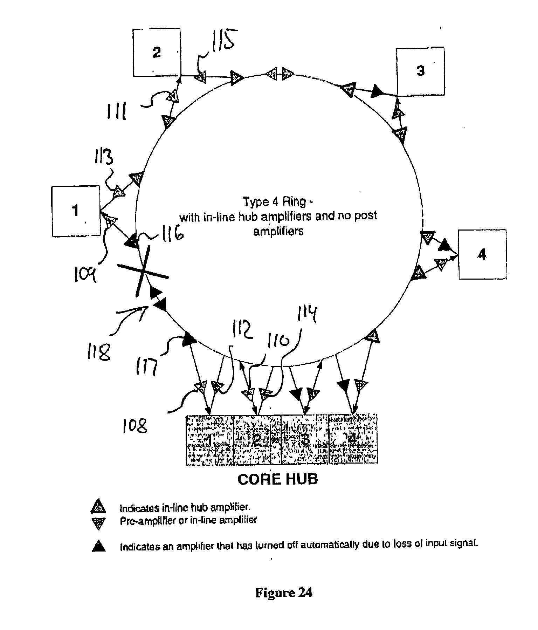

In the event of a cable cut between Metro Hubs 1 and the core (as shown in Figure 24), the primary pre-amplifiers 108, 109, 110, 111 at Core Hub 1, Metro Hub 1, Core Hub 2 and Metro Hub 2 respectively will shut themselves down because there is no longer any input signal. The secondary pre-amplifiers 112, 113, 114, 115 at these hubs must then be turned on. Time to restore traffic will depend on the time required for the pre-amplifiers 112-115 to be turned on and for signal output powers to stabilise. After the secondary pre-amplifiers 112-115 are switched on, the management channel must send signals to the other hubs adjacent to the cut instructing them to turn off the in-line hub amplifiers. An automatic turnoff function could be built into the in-line hub amplifiers similar to the in-line amplifiers in that if it receives no optical signals in its non-amplifying direction it switches off the amplifier. Shutting down these amplifiers will ensure that light levels at the fibre cut are minimised. As shown in Figure 24, the following amplifiers must be turned off:
Metro Hub 1 - in-line hub amplifier 116 facing CCW (can be automatic);
Core Hub 1 - in-line hub amplifier 117 facing CW (can be automatic);
Metro Hub 1,2 - (pre-amps 108, 109 automatically off);
Core Hub 1,2 - (pre-amps 110, 111 automatically off);
(in-line amplifier 118 between hub 1 and core shut down automatically)

Note that once the fibre cut is repaired, these in-line hub amplifiers and in-line amplifiers can he turned back on. Switching of traffic back to the primary path should be scheduled to minimise disruption to customer traffic.

### 14 Fibre failure in Type C embodiment 166 (Figure 1d) with in-line hub amplifiers - example 2

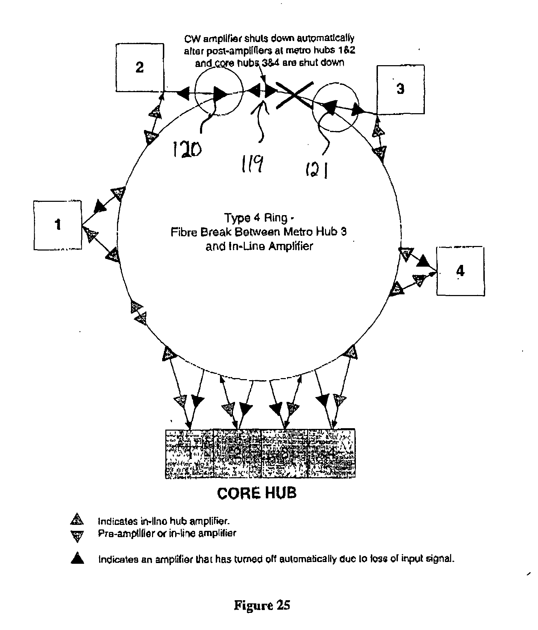

In the event of a cable cut between Metro Hub 3 and the in-line amplifier 119 (as shown in Figure 25), the CCW in-line amplifier will shut itself down because there is no longer any input signal. The in-line hub amplifiers adjacent to the cut are then either shut down by the management system or automatically. This then automatically shuts down the CW in-line amplifier. No pre-ampliflers need to be switched on or off because none of the hubs switch traffic from primary to secondary path. However, the protected path for all hubs is lost until the fibre cut can be repaired. As shown in Figure 25, the following amplifiers must be turned off:
Metro Hub 2 - in-line hub amplifier 120 CW;
Metro Hub 3 - in-line hub amplifier 121 CCW;
(in-line amplifiers 119 between hub 2 and hub 3)

After the fibre cut is repaired, the amplifiers listed above can be turned back without affecting customer traffic.

### 15 In-line hub amplifier failure in Type C embodiment 166 (Figure 1a) with in-line hub amplifiers

For a Type C ring, amplifier failure (pre, post or in-line) will result in similar switching/fault scenarios to those discussed for Type A and B.

It will be appreciated by the person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method of effecting failure protection switching in an optical network, the optical network comprising a ring structure carrying a bi-directional optical data signal, and a plurality of network hubs arranged in-line within the ring structure, each network nub being arranged, in use, to transmit and receive signals bi-directionally along the ring structure, the method comprising the steps of:
a) detecting a "no signal" at a primary pre-amplifier located at one of the network hubs and arranged to pre-amplify a primary optical signal received from a first direction along the ring structure:
b) shutting down the primary pine-amplifier and powering up a secondary pre-amplifier located at the one network hub and arranged to pre-amplify a redundant optical signal corresponding to the optical signal and received from the opposing direction along the ring structure.

2. A method as claimed in claim 1, wherein the method further comprises the step of powering down a post-amplifier located at the one network hub and arranged to post-amplify a transmitted signal from the one network hub along the ring structure in the first direction towards a fibre break causing the "no signal".

3. A method as claimed in claim 2, wherein the method further comprises the step of shutting down other post-amplifiers located at other network hubs, the other post amplifiers being arranged to post-amplify transmitted signals form their respective network hubs for transmission towards the fibre break causing the "no signal".

4. A method as claimed in claim 2 or 3, wherein the optical network further comprises an in-line amplifier arranged, in use, to amplify an optical signal towards the primary pre-amplifier, and wherein the method further comprises, after step a), shutting the in-line amplifier.

5. A method as claimed in any one of claims 1 to 4, wherein the method comprises the step of determining, after step a), whether a signal is still being defected on the management channel at the one network hub, whereby a distinction can be made between a fibre break in the ring structure between the one network hub and an adjacent network hub or in-line amplifier and a failure of a specified amplifier at the adjacent network hub or in-line amplifier for transmitting the signal intended for receipt at the primary pre-amplifier.

6. A method as claimed in any preceding claim, wherein, at the one network hub, a switch is utilised to selectively through connect signals received at the primary or secondary pre-amplifiers into the network hub, and the method further comprises switching the through connections from the primary to the secondary pre-amplifier.

7. An optical network comprising a ring structure carrying a bi-directional optical data signal and a plurality of network hubs arranged in-line within the ring structure, each network hub being arranged, in use, to transmit and receive signals bi-directionally along the ring structure, the network being arranged in a manner such that:
- upon detection of a "no signal" at a primary pre-amplifier located at one of the network hubs and arranged to pre-amplify a primary optical signal received from a first direction along the ring structure; the primary pre-amplifier is being shut down and
- a secondary pre-amplifier located at the other side of the specified network hub and arranged to pre-amplify a redundant optical signal corresponding to the primary optical and received from the opposing direction along the ring structure, is being powered up.

8. An optical network as claimed in claim 7 or 8, wherein the network is further arranged, in use, to power down a post-amplifier located at the one network hub and arranged to post-amplify a transmitted signal from the one network hub along the ring structure in the first direction towards a fibre break causing the "no-signal".

9. An optical network as claimed in claim 7 or 8, wherein the optical network further comprises an in-line amplifier arranged, in use, to amplify an optical signal towards the primary pre-amplifier, and wherein the optical network is arranged, in use the "no signal" has been detected, to shut down the in-line amplifier.

10. An optical network as claimed in claim 9, wherein, where the in line amplifier is disposed post-point of failure, the shutting down is an automatic feature of the in-line amplifier.

11. An optical network as claimed in claim 8, wherein the network is further arranged, in use, to send a specified signal on a management channel of the network, the management channel being outside the channels occupied by the data signal, wherein the specified signal effects the shutting down of other post-amplifiers located at other network hubs, the other post amplifiers being arranged to post-amplify transmitted signals form their respective network hubs towards the fibre break.

12. An optical network as claimed in any one of claims 7 to 11, wherein the network is further arranged, in use, to determine, after the "no signal" has been detected at the first primary preamplifier, whether a signal is still being detected on a management channel at the one network hub, the management channel being outside the channels occupied by the data signal, whereby a distinction can be made between a fibre break in the ring structure between the one network hub and a next adjacent network hub or an in-line amplifier and a failure of a specified amplifier at the next adjacent network hub or the in-line amplifier for transmitting the signal intended for receipt at the primary pre-amplifier.

13. An optical network as claimed in any one of claims 7 to 12, wherein the one network hub further comprises a switch for selectively through connecting signals received at the primary preamplifier into the network hub, or signals received at the secondary pre-amplifiers into the network hub.

14. An optical network as claimed in any one of claims 7 to 12, wherein a passive coupler element is incorporated in the one network hub whereby both the primary and secondary pre-amplifiers are through connected into the network hub.

15. An optical network as claimed in any one of claims 7 to 14, wherein the ring structure comprises at least one single, bi-directional traffic carrying fibre connection between network elements.

16. An optical network as claimed in any one of claims 7 to 15, wherein the ring structure comprises at least two, each uni-directional traffic carrying fibre connections between network elements.

17. An optical network as claimed in any one of claims 7 to 16, wherein the optical network is arranged in a bobbed architecture.

18. An optical network as claimed in any one of claims 7 to 16, wherein the optical network is arranged in a peer to peer architecture.

19. An optical network as claimed in any one of claims 7 to 18, wherein the pre- and/or post amplifiers comprise EDFAs and/or SOAs.

20. An optical network as claimed in any one of claims 7 to 19, wherein the network is further arranged, in use, to determine, after the "no signal" has been detected at the first primary preamplifier, whether a signal is still being detected on a management channel of the network at the one network hub, the management channel being outside the channels occupied by the data signal, and to check status reports of other network hubs and in-line amplifiers, wherebya distinction can be made between a fibre break in the ring structure and a failure of an amplifier.

21. A network hub for use in an optical network, the optical network comprising a ring structure carrying a bi-directional optical data signal and a plurality of networkhubs arranged in-line within the ring structure, the network hub being arranged, in use, to transmit and receive signals bi-directionally along the ring structure, and the network hub comprising:
- a primary pre-amplifier arranged to pre-amplify a primary optical signal received from a first direction along the ring structure and
- a secondary pre-amplifier arranged to pre-amplify a redundant optical signal corresponding to the primary optical signal and received from the opposing direction along the ring structure,
wherein the network hub is arranged, in use upon detection of a "no signal" at the primary pre-amplifier, to shut down the primary pre-amplifier and to power up the secondary pre-amplifier.

22. A network hub as claimed in claim 21, wherein the network hub comprises a passive coupler element for through-connecting both the primary and secondary pre-amplifiers into the network hub for processing of the primary and redundant optical signal.

23. A network hub as claimed in claim 21 or 22, wherein the network hub comprises a switch arranged, in use, to selectively through-connect either the primary or the second preamplifier into the network hub for processing of the primary or redundant optical signal.

24. A network hub as claimed in claim 21, 22 or 23, wherein the ring structure comprises least one single, bi-directional traffic carrying fibre connection between network nodes.

25. A network hub as claimed in any one of claims 21 to 24, wherein the ring structure comprises at least two, each uni-directional traffic carrying fibre connections between network nodes.

26. A network hub as claimed in any one of claims 21 to 25, wherein the network hub further comprises a post-amplifier arranged, in use, to post-amplify a transmitted signal from the network hub along the ring structure in the first direction towards a fibre break causing the "no-signal", and the network hub is further arranged to power down the post amplifier after detection of the "no signal".

27. A network hub as claimed in any one of claims 21 to 26, wherein the pre- and/or post amplifiers comprise EDFAs and/or SOAs.
